# EUROPEAN PATENT SPECIFICATION

(11) **EP 2 519 342 B1**
(45) Date of publication and mention of the grant of the patent: **24.10.2018**
(21) Application number: 09809043.4
(22) Date of filing: 30.12.2009
(51) Int. Cl.: B01J 8/02, B01J 8/04, C01B 3/38

(54) **ENDOTHERMIC REACTION UNIT AND STEAM REFORMING DEVICE COMPRISING THIS REACTION UNIT**
ENDOTHERME REAKTIONSEINHEIT UND DAMPFREFORMATOR MIT DER REAKTIONSEINHEIT
UNITÉ DE RÉACTION ENDOTHERMIQUE ET DISPOSITIF DE REFORMAGE À LA VAPEUR COMPRENANT CETTE UNITÉ DE RÉACTION

(43) Date of publication of application: 07.11.2012
(73) Proprietor: Hysytech S.r.l., 10135 Torino (IT)
(72) Inventor: ANTONINI, Massimiliano, I - 10064 Pinerolo (IT); SALDIVIA, Andres, I-10138 Torino (IT); SARACCO, Guido, I - 10124 Torino (IT); FARINA, Corrado, I-10064 Pinerolo (IT); SOLARO, Simone, I-14055 Costigliole d'Asti (IT); MORI, Marco, I-10141 Torino (IT); ANASTASI, Massimiliano, I-10040 Rivalta di Torino (IT)
(74) Representative: Gervasi, Gemma
(86) International application number: PCT/IT2009/000600
(87) International publication number: WO 2011/080781

(56) References cited:
- JP-A- 9 165 202
- US-A- 5 484 577
- US-A1- 2003 044 334
- US-A1- 2007 006 529

## Description

### FIELD OF THE INVENTION

The present invention falls within the scope of devices for performing industrial processes for hydrocarbon reforming. In particular, the present invention relates to an endothermic reaction unit to be used, for example, to perform catalytic reforming processes, such as a methane steam reforming process. More generally, the device according to the present invention can be used in any process in which a reaction mixture must be subjected to an endothermic reaction. Therefore, the present invention also relates to a methane steam reforming device comprising this reaction unit.

### STATE OF THE ART

As it is known, endothermic reaction units are widely used in industrial processes for hydrocarbon treatment. The aim of these units is to supply thermal energy to a mixture, circulating in reaction elements, in order to produce an endothermic reaction.

An example of these processes in which endothermic reactions are produced is provided by hydrocarbon reforming processes. Through these processes hydrogen is produced from a reaction mixture comprising hydrocarbons. Reforming processes require the use of a reaction unit (also called reforming reactor) inside which the reactions take place that convert the hydrocarbon mixture into a different gaseous mixture (also called reformed gas mixture) containing CO,H₂, CH₄, CO and H₂O. After reforming, the reformed gas mixture can be subjected to further treatments according to requirements. In applications destined to supply fuel cells, for example, the gaseous mixture delivered from the reaction unit passes through carbon monoxide conversion (water gas shift) sections and PROX (preferential oxidation) sections to selectively eliminate carbon monoxide until it is present only in traces acceptable, for example, for the anode of the fuel cell. In those applications in which the presence of pure hydrogen is required, a section is provided for the removal of humidity and carbon dioxide from the mixture treated in the reforming reactor.

Within the scope of reforming processes, methane steam reforming processes are widely used, above all, to produce hydrogen used in other industrial processes, such as ammonia synthesis processes. At high temperatures and in the presence of a metal based catalyst (such as nickel) the steam reacts with the methane to produce carbon monoxide and hydrogen. This reaction is of endothermic type and for this reason the reaction units usually comprise a chamber in which combustion takes place destined to supply thermal energy useful for the aforesaid reaction.

An example of reaction unit or reformer reactor is illustrated in the patent application US 2007/0006529. In particular this solution provides for a combustion chamber which is supplied by flows of combustion air and fuel which are preheated through the products deriving from combustion. The reformer reactor comprises a substantially U-shaped reaction element into which a reaction catalyst element is inserted. The combustion chamber is positioned so that the combustion products strike the outer surface of the reaction element so as to supply thermal energy to the aforesaid reaction.

Another example of steam reforming devices is illustrated in the patent US 5484577. In particular, in this second solution the reformer reactor comprises a substantially cylindrical housing inside which reaction elements containing catalysts of the reforming reaction are positioned. The reactor also comprises a gas burner which is positioned at one side of the housing inside the cylindrical housing so as to direct the combustion products towards the outer surfaces of the reaction elements to supply the thermal energy required by these elements.

US 2003/044334 discloses a fuel reformer reactor comprising a centrally located combustion chamber and a reaction element filled with a catalyst disposed around the combustion chamber.

Although being relatively efficient from a functional viewpoint, the solutions described, just as others with similar structure, have some technical drawbacks, the first of which is encountered in the arrangement of the combustion production means through which the thermal energy required for reforming is generated. In fact, it has been found that the position of these combustion means with respect to the position of the reaction elements (containing the catalyst) does not allow efficient heating of these elements, thereby limiting the performance of the reaction unit. In other words, there is a need to obtain new solutions that allow improved transfer of thermal energy from combustion to the reaction elements in order to optimize heating of the catalyst with the lowest possible energy costs.

Therefore, the main aim of the present invention is to provide an endothermic reaction unit that allows these technical limits to be overcome.

Within this aim, a first object is to provide a reaction unit that allows heating of the reaction elements used for the reforming reaction to be optimized in order to limit the relative energy costs.

A further object of the present invention is to provide a reaction unit which is reliable and relatively easy to produce at competitive costs.

### SUMMARY OF THE INVENTION

The present invention therefore relates to an endothermic reaction unit comprising a first combustion chamber made of metal material, inside which a first combustion stage is produced and a second combustion chamber defining a second combustion stage. The first combustion chamber is housed at least partly inside the second combustion chamber. The reaction unit according to the invention also comprises at least one reaction element comprising a housing body made of metal material through which a reaction mixture is destined to pass. Said at least one reaction element is housed at least partly inside the second combustion chamber and is thermally connected to the first combustion chamber so that at least part of the heat generated inside the first combustion chamber is transferred by conduction to said at least one reaction element.

The reaction unit according to the invention can advantageously be used for any type of process in which an endothermic reaction is required. In particular, the reaction unit is particularly suitable for catalytic reforming processes of hydrocarbons, such as the methane steam reforming process. The reaction unit according to the invention allows a high degree of heating of the reaction elements due to heat exchange through conduction produced between the combustion chamber and these reaction elements. Heating of these elements is also increased by the presence of secondary combustion that is developed in the second combustion chamber. The dual heating mode optimizes the energy costs relative to combustion, or the thermal performance of the reaction unit.

According to a first aspect of the present invention, the reaction unit comprises a plurality of reaction elements which are thermally connected to the first combustion chamber, preferably through welding which connects the housing body of the reaction elements to the walls of the combustion chamber. In the case in which the reaction unit is destined to be used, for example, in catalytic reforming processes then the reaction elements can advantageously contain a catalytic reagent for the purpose of allowing the reforming reaction.

According to a first aspect of the present invention, the reaction unit comprises a burner which is provided with a main body formed by a cylindrically shaped tubular element that extends according to a first longitudinal axis. The tubular element comprises an axial cavity, open on at least one side, a portion of which made of metal material defines the first combustion chamber. The reaction elements have a hollow tubular housing body which extends along a second longitudinal axis. In particular, the reaction elements are connected to the external surface of the tubular element so that for each reaction element the relative second longitudinal axis is substantially parallel to the first longitudinal axis along which the tubular element of the burner extends.

According to a further aspect of the present invention, the burner comprises first feed means to introduce a first combustion reagent (such as combustion air) into said operating cavity in an intake position of the first reagent and second feed means to introduce a second combustion reagent (for example a liquid or gaseous fuel) into the operating cavity of the tubular element in an intake position of the second reagent. A portion of the operating cavity between the intake position of the first reagent and the intake position of the second reagent delimits a stabilization chamber of the flow of first reagent upstream of the first combustion chamber (with respect to the intake position of the second reagent). In particular, the first feed means are configured so as to introduce a flow of first reagent according to a direction tangential to the section of the stabilization chamber so as to impart a substantially spiral motion on the flow. The second feed means are instead configured so as to introduce a flow of second reagent according to a direction substantially parallel to the first longitudinal axis along which the tubular element extends.

It has been found that the presence of the stabilization chamber of flow of first reagent allows extremely stable operating conditions to be obtained for the first combustion stage, both from the viewpoint of flame development and from the viewpoint of combustion stoichiometric ratio, which advantageously remains constant due to the stable flow rates of the reagents.

According to a preferred embodiment of the invention, the stabilization chamber and the combustion chamber have the same diameter. In other words, the axial operating cavity of the tubular element has a constant section along the entire length thereof. It has been found that this feature also advantageously increases the degree of heating of the walls of the first combustion chamber.

According to another aspect of the present invention, the second combustion chamber comprises a substantially cylindrically shaped housing liner that extends along a longitudinal axis between a first and a second transverse wall opposite the first. The burner is preferably arranged so that the longitudinal axis of the tubular element substantially coincides with the long longitudinal axis around which the second housing liner extends. Through this solution the products deriving from the first combustion stage are distributed uniformly around the reaction elements arranged in the annular space between the two combustion chambers thereby optimizing secondary combustion, or heating of these reaction elements by convection/radiation.

The present invention also relates to a methane steam reforming device which is characterized in that it comprises a reaction unit according to the present invention. In particular, the device according to the invention comprises a first heat exchanger to preheat a reaction mixture (formed of steam and hydrocarbons) before it passes through the reaction elements. More precisely, the first heat exchanger is configured so as to transfer part of the thermal energy of the combustion products of the second stage to the reaction mixture.

The steam reforming device according to the invention preferably also comprises a second heat exchanger to evaporate the water destined to mix in steam state with the flow of hydrocarbons to form the destined reaction mixture. More precisely, the second heat exchanger is configured to evaporate water through a part of the heat contained in the mixture delivered from the reaction elements.

### LIST OF FIGURES

Further features and advantages of the present invention shall be apparent from the description of particular embodiments of the present invention, illustrated by way of non-limiting example in the accompanying drawings, wherein:
- Fig. 1 is a sectional view relative to a first possible embodiment of a reaction unit according to the present invention;
- Fig. 2 is a view according to the line II of Fig. 1;
- Fig. 3 is a sectional view of a second embodiment of a reaction unit according to the present invention;
- Fig. 4 is a sectional view according to the line IV-IV of Fig. 3;
- Fig. 5 is a detailed view of a burner 1 of the reaction unit of Fig. 3;
- Fig. 6 is a sectional view of a methane steam reforming device according to the present invention;
- Figs. 7 and 8 are respectively a first and a second perspective partly sectional view of a steam reforming device containing the reaction unit of Fig. 3.
- Fig. 9 is a sectional view of a burner of the reaction unit of Fig. 1;

### DETAILED DESCRIPTION

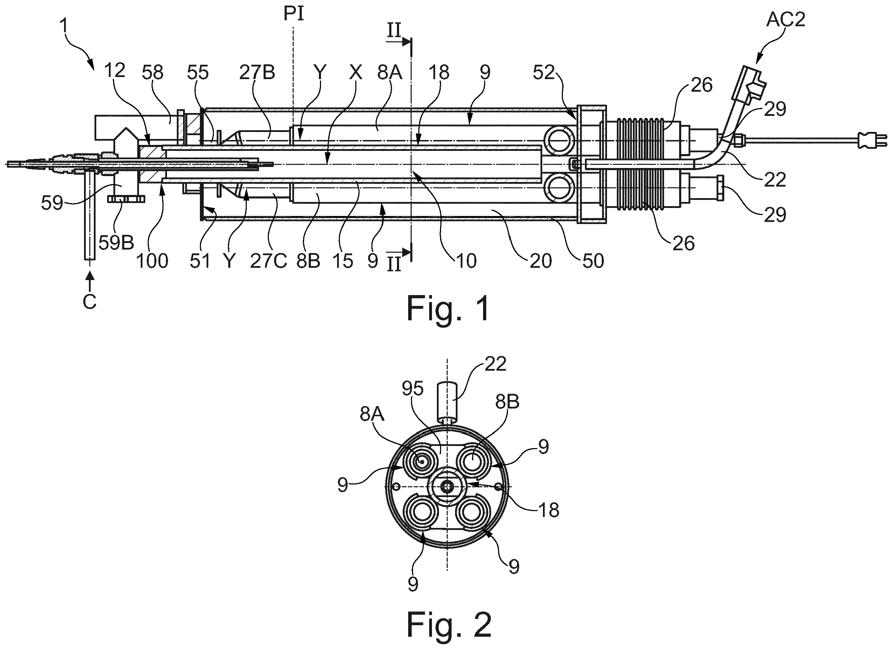

Fig. 1 is relative to a first embodiment of a reaction unit according to the present invention which will be indicated hereafter with the reference numeral 1. The reaction unit 1 comprises a first combustion chamber 10 inside which a first combustion (indicated hereafter as "primary combustion") of a mixture is destined to develop, the mixture being composed of a first reagent that acts as oxidizer (for example air AC or a gaseous mixture) and of a second reagent that acts as fuel C. In particular, the fuel can be in gaseous form or in liquid form. The reaction unit 1 also comprises a second combustion chamber 20 inside which a second combustion (indicated hereafter as "secondary combustion") of the products generated by the first combustion is destined to develop.

The reaction unit 1 comprises at least a reaction element 8A, 8B comprising a housing body 9 made of metal material which can house therein a catalyst destined, for example, to promote a reforming reaction of a hydrocarbon (such as methane). In particular, the reaction element 8A,8B is housed at least partly inside the second combustion chamber 20 and is connected to the first combustion chamber 10 so that at least part of the heat generated inside the first combustion chamber 10 is transferred through conduction to the housing body 9 of the reaction element 8A;8B. In practice, according to the present invention the reaction element 8A,8B, and therefore any catalyst contained therein, is heated partly by conduction, following contact of the body 9 with the walls 18 of the first combustion chamber 10, and partly by convection through the products of the combustion that takes place in the second combustion chamber 20.

The connection between the first combustion chamber 10 and the reaction element 8A,8B can be "direct", in the sense that the walls 18 of the first combustion chamber 10 can be in direct physical contact with the housing body 8B. However, the possibility of this connection being substantially "indirect" also falls within the scope of the present invention, this being intended as indicating, for example, a possible solution according to which an interface element made of thermally conductive material is provided, positioned between the first combustion chamber 10 and the reaction element 8A,8B. In this case the interface element would in fact form a thermal conduction element between the first combustion chamber 10 and the reaction element 8A,8B.

With reference to Fig. 1, the reaction unit comprises a burner 100 formed by a tubular element 15 that extends along an axial direction indicated hereafter also as "longitudinal axis X". The tubular element 15 comprises an axial cavity preferably delimited on one side by a housing wall 12. This cavity is open on the side opposite this wall 12. A first portion of the axial cavity defines the first combustion chamber 10. In practice, for the entire longitudinal extension of this first portion, the relative wall of the tubular element 15 coincides with the wall of the first combustion chamber 10. The reaction elements 8A,8B have a substantially cylindrical housing body 9 extending according to a relative longitudinal direction Y and which has an axial cavity for circulation of the reaction mixture. In particular, the elements 8A,8B are operatively connected to the wall 18 of the first combustion chamber 10 so that for each element 8A,8B, the relative longitudinal axis Y is substantially parallel to the longitudinal axis X along which the tubular element 15 or the first combustion chamber 10 extends.

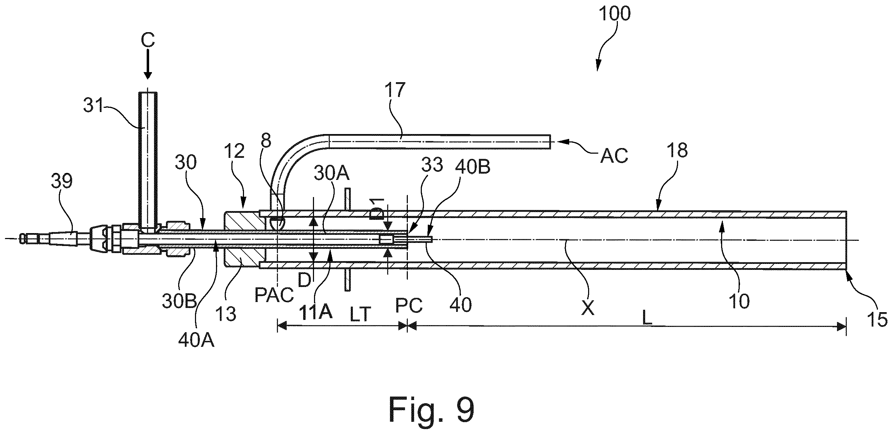

The burner 100 also comprises first feed means for introducing a first reagent into the axial operating cavity in an intake position (PAC) of the first reagent and second feed means for introducing a second reagent into said axial cavity in an intake position (PC) of the second reagent (see Fig. 9). Hereafter, purely to simplify the description, combustion air AC will be considered as first reagent and fuel C in liquid or gaseous form as second reagent.

Fig. 9 illustrates in particular the burner 100 isolated from the other elements that form the reaction unit 1. The first feed means of the burner 100 are configured so as to introduce a flow of first reagent (combustion air AC) "tangentially" with respect to the cross section (i.e. according to a plane orthogonal to the axis X) of the axial cavity or so as to impart a spiral motion to the flow of first reagent.

The second feed means of the burner 100 are configured so as to introduce a flow of fuel C into the axial cavity parallel to the longitudinal direction X in which the cavity extends. A second portion of this axial cavity, between the intake position (PAC) of the first reagent and the intake position PC of the second reagent, delimits a stabilization chamber 11A of the flow of the first reagent or a volume destined to be passed through only by the flow of first reagent according to a spiral motion. More precisely, this spiral flow is stabilized as a result of the axial length LT of the stabilization chamber which is therefore upstream of the first combustion chamber 10. The first combustion is ignited immediately downstream of the intake position PC of the second reagent, and thus propagates in the first combustion chamber 10.

On the basis of the solution described above, the combustion chamber 10 and the stabilization chamber 11A of the flow of first reagent are structurally defined and integrated in the tubular element 15 of the burner 100. This naturally makes it possible to obtain an extremely compact structure of the burner 100, which is above all easily produced .

Through the cylindrical surface of the tubular element 10, besides being transferred by conduction to the reaction elements 8A,8B the thermal energy deriving from primary combustion is also advantageously radiated in the second combustion chamber 20 so as to increase the thermal content thereof, or so as to optimize the conditions around which secondary combustion develops.

Combustion in the first combustion chamber 10 is preferably ignited by ignition means positioned inside the operating cavity. In particular, the ignition means are operatively positioned so as to ignite combustion, and thus generate the relative flame, in a region immediately downstream of the fuel intake position PC, or in the position in which the flammable mixture originates. It has been found that through the configuration of the operating cavity described a combustion flame that is extremely stable and constant in time is obtained. This is due to the spiral motion of the combustion air AC advantageously stabilized inside the stabilization chamber 11A. Stabilization of the spiral motion in fact allows a constant flow rate of combustion air, or a constant stoichiometric ratio, to be obtained.

With reference once again to the sectional view of Fig. 9, the axial operating cavity of the tubular element 10 preferably has a constant diameter for the entire length thereof. In other words, the stabilization chamber and the first combustion chamber 10 have the same diametric extension. It has been found that this solution further stabilizes the combustion flame and simultaneously allows the flame to constantly and extensively lick the inner surface of the walls 18 of the combustion chamber 10. This translates into efficient and uniform heating of these walls 18 generated directly by the action of the combustion flame.

Again with reference to Fig. 9, the housing wall 12 delimiting on one side the operating cavity (or the relative first portion 11A), is defined by a cap element 13 permanently connected to the end of the tubular element 15. In the case illustrated, the first feed means comprise a feed duct 17 which is in communication on the one side with a source of combustion air AC and on the other side with the axial cavity through an opening 8. The position of this opening 8 in substance defines the combustion air AC intake position in the stabilization chamber. As illustrated, the position of the opening 8 is substantially adjacent to the housing wall 12 so as to oblige the entire flow of combustion air AC to move in the direction of the first combustion chamber 10. The combustion air AC source (not shown in the figures) can be composed, for example, of a blower or alternatively of a compressed air duct or of any other system capable of providing the flow rate of combustion air AC required at the pressure necessary to overcome load losses and thus allow correct operation of the burner 1.

The second feed means preferably comprise a lance element 30 for intake of the fuel C which extends through the cap element 13 and is connected thereto. More precisely, the lance element 30 is inserted in a hole passing through the cap element 13 so as to emerge with a first portion 30A inside the axial cavity. The lance element 30 comprises a second portion 30B outside the tubular element 15. This second portion 30B is in communication, for example through a supply pipe 31, with a fuel source (not shown), which can, for example, be a bottle of methane or other pressurized gaseous fuel. As clearly illustrated, the first portion 30A of the lance element 30 is substantially coaxial with the axial cavity and terminates with an emission end 33 through which the fuel C exits. The axial extension of this first portion 30A in practice defines the axial extension of the stabilization chamber 11A of the air as it stabilizes the distance between the intake position of the combustion air PAC and the fuel intake position PC. It has been found that excellent results in terms of combustion stability are obtained, given the same reagents used, when the ratio between the distance LT of the intake positions of the two reagents (or the distance between the position PC and the position PAC) and the diameter D of the stabilization chamber 11A is contained within an interval of values between 1 and 10. It has been found that satisfactory results in terms of heating efficiency are achieved when the ratio between said distance LT between the intake of the reagents and the axial length L of the first combustion chamber 10 is contained within an interval of values between 0.1 and 2. Moreover, it has been found that particularly favorable conditions in terms of stabilization of fluid dynamic motion inside the stabilization chamber are achieved when the ratio between the internal diameter D of the stabilization chamber and the diameter D1 of the first portion 30A of the lance element 30 is contained within an interval of values between 2 and 10.

In the embodiments of the burner 1 illustrated in the figures, the combustion ignition means preferably comprise a spark igniter 40 positioned inside the lance element 30. More precisely, the spark igniter 40 comprises a central body 40A, made of insulating material, arranged coaxially inside the lance element 30 and connected by a first part to an electrical source (not shown) through an electrical connection plug 39. The opposite part of the central body 40A comprises an ignition end 40B, also called tip, which emerges with respect to the fuel emission end 33 of the lance element. This emerging position of the tip allows the spark to strike in a region in which flammable mixture is undoubtedly present in the correct stoichiometric ratio, which can advantageously remain constant.

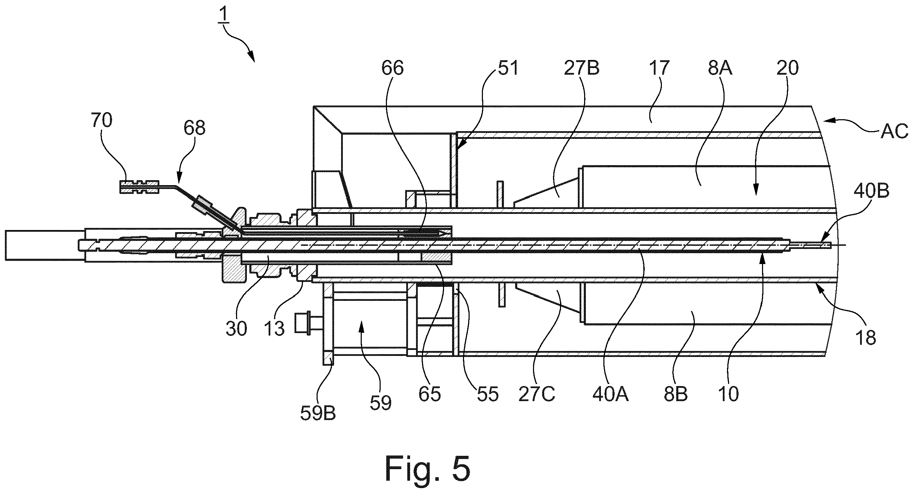

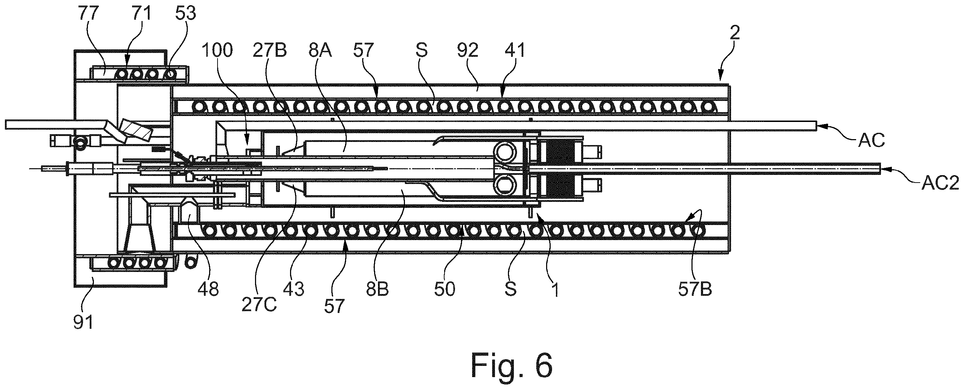

The view of Fig. 5 illustrates a second possible embodiment that differs from that of Fig. 9 mainly due to a different embodiment of the second feed means, which in this case are configured to feed the combustion with liquid fuel. With reference, for example, to Fig. 5, it can be seen that the main body of the burner is also in this case composed of a tubular element 10 made of metal material closed at one end by a cap element 13 delimiting on the one side the axial cavity. Also in this case, the second feed means comprise a central lance 30 which is closed at the end through a closing element 65 which forms a nozzle 66 through which the flow of second reagent (in this case the fuel C) exits substantially in axial direction X. The axial position of the nozzle 66 in substance defines the intake position PC of the fuel C. In particular, the liquid fuel reaches the nozzle 66 through a feed circuit 68 which can also comprise a heater 70 (see, for example, Fig. 6) to take the fuel to the temperature and pressure conditions necessary to make it vaporize, after having passed through the nozzle 66, in the axial cavity of the tubular element 10. With reference once again to Fig. 1, the second combustion chamber 20 is defined by a substantially cylindrical shaped housing liner 50 which extends longitudinally between a first transverse wall 51 and a second transverse wall 52 opposite the first. The tubular element 10 of the burner 100 is positioned so that the first combustion chamber 10 is coaxial with the second combustion chamber 20. In other words, the two combustion chambers 10,20 are aligned according to the axial direction X along which they both extend. As can be seen, the tubular element 10 is inserted so as to remain distanced from the second wall 52. Through this solution the primary combustion products flow into the second combustion chamber 20.

The first transverse wall 51 of the housing liner 50 comprises a discharge opening 55 to discharge the products deriving from the second combustion. In particular, in the solution illustrated the discharge opening 55 is coaxial with the housing liner 50 or with the tubular element 10 of the burner 1. In the solution illustrated in Fig. 1, the reaction unit 1 is also provided with a conveying element 58 to convey the products delivered from the second combustion chamber 20 through the discharge opening 55. In the case illustrated, the conveying element 58 comprises a discharge outlet 59 connectable, through a flange element 59B, to an evacuation duct, not shown in the figures. In an alternative solution to the one described above, a portion of the gases delivered from the second combustion chamber 20 can advantageously be used to preheat the gaseous substance destined to pass through the reaction elements 8A, 8B of the reaction unit 1, as described in greater detail below.

The tubular element 15 is inserted so as to remain distanced from the second wall 52 so that the primary combustion products can be released inside the secondary combustion chamber 20 in which secondary combustion takes place. For this purpose, the reaction unit 1 preferably comprises further feed means to introduce a further flow of combustion air AC2 into the second combustion chamber 20. With reference again to Fig. 1, these further feed means comprise a feed pipe 22 communicating with a combustion air source (not shown) and arranged so as to configure a jet of combustion air in a position in front of the outlet of the first combustion chamber 10 in a position substantially coaxial therewith. It has been found that this intake position of the combustion air AC2 destined for secondary combustion optimizes mixing thereof with the products of the first combustion. This advantage translates into stable secondary combustion.

The reaction unit 1 of Fig. 1 comprises a plurality of reaction elements 8A,8B which are operatively arranged in the annular space defined between the two combustion chambers 10,20. In the case illustrated, the reaction unit 1 comprises four reaction elements 8A,8B which are positioned inside the second combustion chamber 20 so as to surround the first combustion chamber 10. In particular, the reaction elements 8A, 8B are arranged so that the longitudinal axis Y thereof is substantially parallel to the longitudinal axis of the two combustion chambers 10, 20. Fig. 2 is a sectional view that allows detailed observation of the substantially circumferential arrangement of the reaction elements 8A, 8B with respect to the tubular element 10. The outer surface of the housing bodies 9 of the reaction elements 8A,8B is in direct contact with the outer surface 18 of the tubular
element 15, in the sense that said housing bodies 9 rest on said outer surface 18. A part of the heat that develops inside the first combustion chamber 10 is thus transferred by conduction to these housing bodies 8B. These latter are further heated by radiation/convection by the secondary combustion which takes place in the second combustion chamber 20.

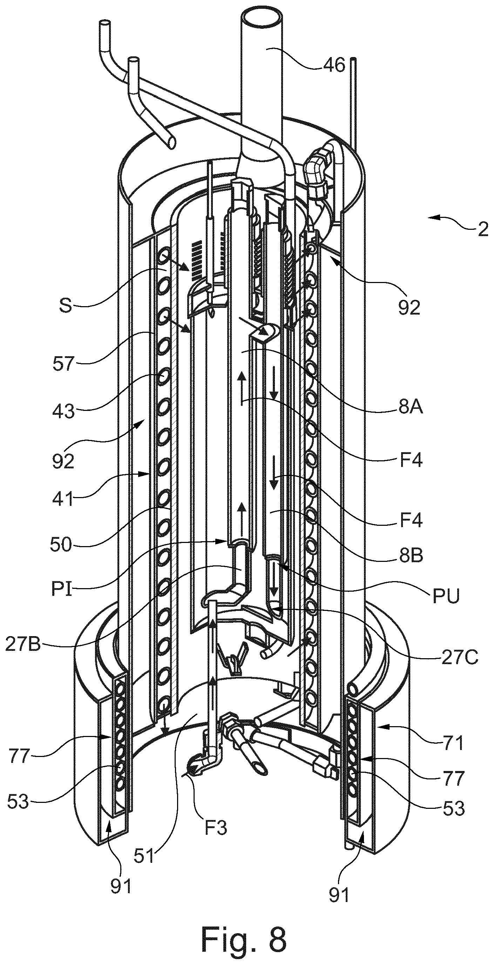

According to a preferred embodiment of the invention, the housing bodies 9 of the reaction elements 8A, 8B are welded directly to the outer surface 18 of the tubular body 15 so as to adopt the arrangement described above. The reaction elements 8A,8B are connected in twos, through a connecting portion 95 (indicated in Fig. 2), so as to allow the reaction mixture to pass from one of the reaction elements to the other connected thereto. In practice, the two connected elements 8A, 8B define a hydraulic circuit inside the second combustion chamber 20 for passage of the reaction mixture. For each mutually connected pair of elements 8A,8B the mixture is introduced in a first 8A of the two elements in an intake position (indicated with PI) opposite with respect to the position of the connecting element 95 and exits from the second element 8B of the two elements in an output position PU close to the intake position PI (see Fig. 8). The mixture is introduced through an intake part 27B welded to the outer surface 18 of the tubular element 15 and to the first element 8A. Analogously, the mixture exits from an outlet part 27C welded to the outer surface 18 and to the second element in the output position PU of the tubular element 15.

As better specified below, in the case in which the reaction unit 1 is used in a methane steam reforming device then the mixture circulating in the reaction elements will be formed partly of steam and partly of hydrocarbons, which will be mixed before reaching the intake portion 27B. It is nonetheless understood that the composition of the mixture and the nature of any catalyst element contained in the reaction elements 8A,8B can vary according to the application required. Moreover the number of reaction elements can differ from those relative to the solution illustrated in the figures according to requirements.

Again with reference to Fig. 1, the reaction elements 8A,8B comprise an outer end portion 26 that exits from the second combustion chamber 20 through the second transverse wall 52. This terminal portion is substantially bellows shaped and has the function of limiting the thermal dilations to which the reaction elements 8A,8B are subjected during heating thereof. Each outer end portion 26 comprises a cap 29 to contain the mixture inside the relative reaction element 8A,8B.

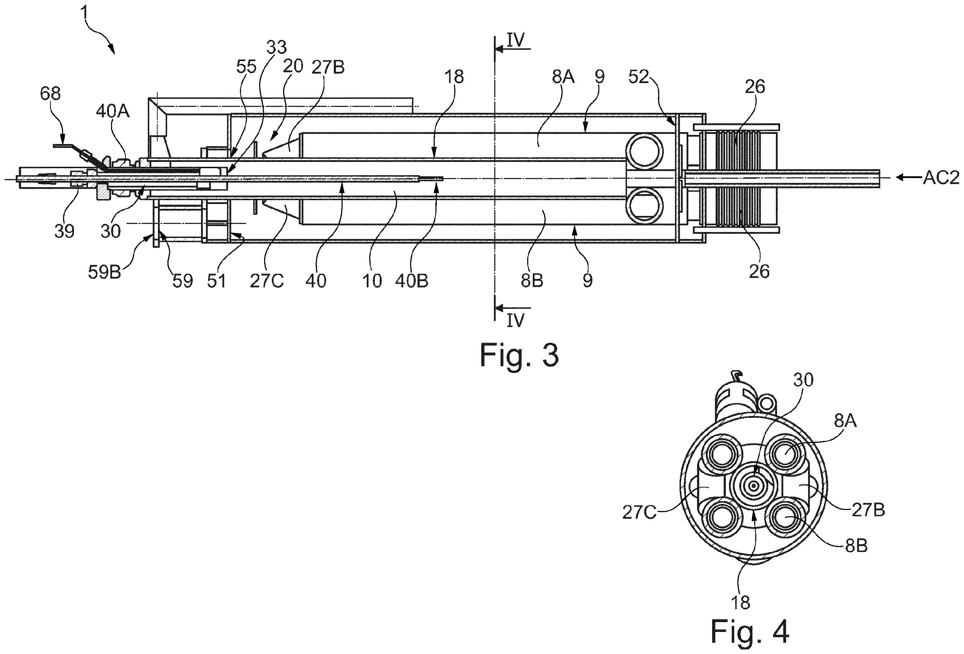

Figs. 3 and 4 relate to a second embodiment of the reaction unit 1 according to the invention which differs from the previous embodiment mainly through the use of the burner 100, illustrated in Fig. 5 and already described above. As illustrated, ignition means, substantially the same as those used in the case of the gaseous fuel burner illustrated in Fig. 9, are provided for the liquid fuel burner. In detail, they comprise a spark igniter 40 positioned coaxially inside the lance element 30 and comprising an ignition tip 40B, which emerges with respect to the end of the lance element 30.

With reference to Figs. 6 to 8, the present invention also relates to a device for reforming a gaseous mixture containing a hydrocarbon, said device comprising a reaction unit 1 according to the present invention. The expression "gaseous reaction mixture" indicates the mixture destined to pass through the inside of the reaction elements 8A,8B of the reaction unit of the mixture. More precisely, the present invention relates to a methane steam-reforming device.

With reference to Fig. 6, this device 2 comprises the reaction unit 1, illustrated in Figs. 3 to 5, in which a liquid fuel is used for primary combustion. It is naturally understood that the device 2 could comprise a gaseous fuel burner 100.

The device 2 comprises a first heat exchanger 41 to preheat the gaseous mixture before it reaches the intake of the reaction elements 8A.8B. More precisely, the mixture is preheated through heat exchange with the discharge fumes delivered from the second combustion chamber 20 of the reaction unit 1. In the case illustrated, the first heat exchanger 41 comprises a housing defining an annular space S delimited by an outer liner 57 and by an inner liner 57B which extend longitudinally around the housing liner 50 of the second combustion chamber 20. Positioned inside this annular space S is a first coil 43 inside which the gaseous mixture is made to circulate.

The annular space S is hydraulically connected to the fume discharge opening 55 of the first transverse wall 51 of the second combustion chamber 20 through the conveying element 58. In practice, through this element 58 the fumes deriving from secondary combustion are conveyed directly into the intake 48 of the annular space S positioned on a first side thereof in a position close to the first transverse wall 51 of the second combustion chamber 20. These fumes are destined to lick the outside of the first coil 43 so as to transfer part of their thermal energy to the gaseous mixture circulating inside the coil. Subsequently, the fumes are delivered from the annular space S through a discharge opening 46 positioned opposite the intake 48.

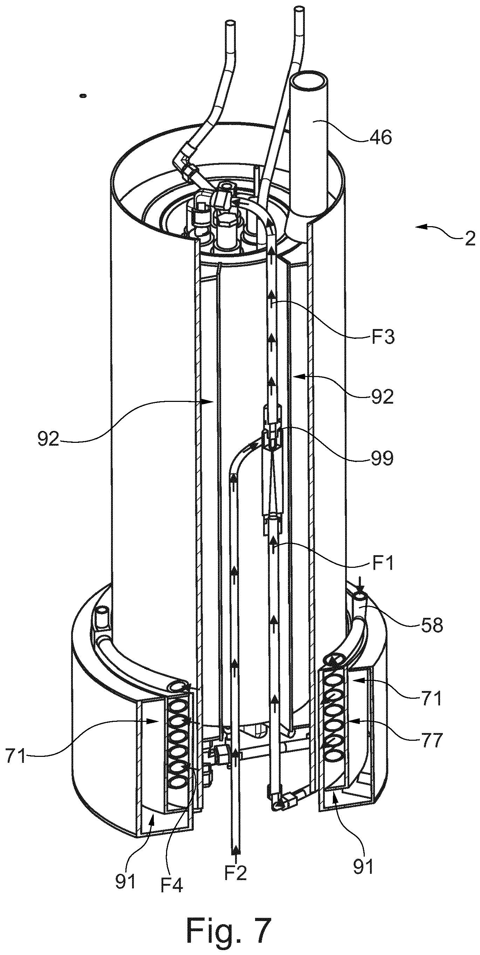

Figs. 7 and 8 are perspective sectional views that allow observation of further details of the steam reforming device according to the present invention. In particular, the device 2 comprises a second heat exchanger having the function of evaporator. More precisely, through this second heat exchanger 71 (hereafter also indicated with the expression evaporator 71), the heat of the gaseous mixture delivered from the reaction elements 8A,8B is used to evaporate the water destined to be mixed with methane to form the gaseous reaction mixture. In the solution illustrated, the evaporator 71 is composed of a heat exchange chamber 77 of annular shape, positioned inside which is a second heat exchange coil 53 which has an intake 58 connected to a water source (not shown).

The annular chamber 77 comprises an intake section (not visible) for intake of the mixture delivered from the reaction elements 8A,8B and an outlet section (not visible) for delivery of this gaseous mixture subsequent to heat exchange with the second coil 53. A first annular insulating liner 91 is arranged around the annular chamber 77 of the evaporator 71 in order to limit thermal dispersion. For this purpose, the device 2 also comprises a second annular insulating liner 92 arranged around the liner 57 of the first heat exchanger 41. More in detail, the first 91 and the second annular liner 92 contain insulating material with high properties of resistance to thermal conduction, such as materials comprising *mixed silicon, aluminum and titanium oxides.*

Operation of the methane steam reforming device illustrated in the figures and described above will now be described. With reference to Fig. 7, the flow of vaporized water F1 obtained through the evaporator 71 is sent to a mixer 99 to be mixed with a flow of hydrocarbons F2 so as to generate the reaction mixture to be reformed. With reference to Fig. 8, the reaction mixture (whose flow is indicated with the reference F3) delivered from the mixer 99 reaches the intake of the first coil 43 of the first heat exchanger 41 so as to be preheated through the combustion fumes delivered from the second combustion chamber 20. At the outlet of the first coil 43, the gaseous mixture enters the first reaction element 8A to react with the catalyst through the intake portion 27B. After having passed through the first reaction element 8A, the flow of mixture enters a second element 8B through the connecting portion 95 and is then delivered therefrom through the outlet portion 27C.

In particular, after passing through the reaction elements 8A, 8B, the gaseous mixture will be transformed chemically into a flow F4 destined to pass through the annular chamber 77 of the evaporator 71 to allow the evaporation of water destined for the intake of the mixer 99. It is observed that the main function of the reaction unit 1, through the combustion chambers 10,20, is of maintaining the reaction elements 8A,8B and any catalyst contained therein, at the correct temperature. Preheating of the flow F3 of gaseous mixture is produced by exploiting the residual thermal energy contained in the fumes delivered from the second combustion chamber 20, while evaporation of the water (flow F1) destined for steam reforming is obtained by exploiting the thermal energy of the flow F4 of the reformed mixture delivered from the reaction elements 8A,8B.

The mixture transformed by the reaction in the reactors 8A,8B can subsequently be subjected to further treatments in other treatment devices such as HTWGS (High-Temperature Water-Gas Shift.), LTWGS (Low-Temperature Water-Gas Shift), methanation or COPROx devices.

The technical solutions adopted for the reaction unit and for the methane steam reforming device allow the aim and objects set to be fully achieved. In particular, the reaction unit according to the invention has high a functional versatility, which makes it suitable for use in different applications. Moreover, the methane steam reforming device described above is particularly compact and very efficient at competitive manufacturing costs.

The reaction unit and the methane steam reforming device thus conceived are susceptible to numerous modifications and variants, all falling within the scope of the inventive concept; moreover all details can be replaced by other technically equivalent details.

In practice, the materials used and the contingent dimensions and forms can be any, according to requirements and to the state of the art.

## Claims

1. An endothermic reaction unit (1) comprising at least one reaction element (8A,8B) including a housing body (9) through which a reaction mixture is destined to pass **characterized in that** it comprises:
= a first combustion chamber (10) made of metal material, inside which a first combustion stage is produced;
= a second combustion chamber (20) defining a second combustion stage, said first combustion chamber (10) being housed at least partly inside said second combustion chamber (20),
wherein
said at least one reaction element being housed at least partly inside said second combustion chamber (20) and thermally connected to said first combustion chamber (10), said first combustion chamber (10) being configured to generate heat inside itself and to transfer by conduction at least part of said heat to said at least one reaction element (8).

2. The reaction unit (1) according to claim 1, wherein said at least one reaction element (8A,8B) contains a reaction catalyst.

3. The reaction unit (1) according to claim 1 or 2, wherein said housing body (8B) of said at least one reaction element (8A, 8B) is welded to the outside of the walls of said first combustion chamber (10).

4. The reaction unit (1) according to any one of claims 1 to 3, wherein said unit (1) comprises a plurality of reaction elements (8) thermally connected to said first combustion chamber (10), at least one pair of said reaction elements (8A, 8B) being mutually hydraulically communicating to allow passage of said reaction mixture from one reaction element (8A) to the other (8B).

5. The reaction unit (1) according to claim 1, wherein said reaction unit comprises a burner (100) formed by a cylindrically shaped tubular element (15) which extends along a longitudinal axis (X), said tubular element comprising an axial operating cavity open at least on one side and provided with a first portion of which it defines said first combustion chamber (10), said reaction elements 8A,8B comprising a substantially cylindrical and internally hollow housing body (9) which extends along a relative longitudinal direction (Y), said reaction elements (8A,8B) being connected to the outer surface of the walls of said tubular element (15) which delimit said first portion of said axial cavity so that for each reaction element (8A,8B) the relative longitudinal axis is substantially parallel to the longitudinal axis of said tubular element (15).

6. The reaction unit (1) according to claim 5, wherein said burner (100) comprises:
= first feed means to introduce a first combustion reagent into said axial operating cavity in an intake position (PAC) of said first reagent;
= second feed means to introduce a second combustion reagent into said axial operating cavity in an intake position (PC) of said second reagent,
and wherein said axial operating cavity comprises a second portion between the intake position (PAC) of said first reagent and the intake position (PC) of said second reagent, said second portion delimiting a stabilization chamber (11A) of the flow of said first reagent upstream of said first combustion chamber (10), said first feed means being configured so as to introduce a flow of first reagent according to a direction tangential to the transverse section of said stabilization chamber (11A), said second feed means being configured so as to introduce a flow of second reagent according to a direction substantially parallel to the longitudinal axis along which the tubular element (15) extends.

7. The reaction unit (1) according to claim 6, wherein said first portion and said second portion of said axial operating cavity of said tubular element (15) have the same diameter.

8. The reaction unit (1) according to any one of claims 5 to 7, wherein said second combustion chamber (20) comprises a substantially cylindrically shaped housing liner (50) which extends between a first (51) and a second transverse wall (52) along a relative longitudinal axis, said tubular element (15) of said burner (100) being operatively positioned so that its longitudinal axis (X) substantially coincides with the longitudinal axis according with respect to which said housing liner (50) extends.

9. The reaction unit (1) according to one or more of claims 1 to 8, wherein said unit (1) comprises feed means to introduce a combustion reagent (AC2) into said second combustion chamber (20).

10. A methane steam reforming device (2) configured to process a reaction mixture formed partly by water vapor and partly by hydrocarbon gases, **characterized in that** it comprises a reaction unit (1) according to any one of claims 1 to 9, said reaction mixture being susceptible to pass through one or more reaction elements (8A, 8B) of said reaction unit (1), wherein said device (2) comprises a first heat exchanger (41) configured to heat said reaction mixture before it passes through said one or more reaction elements (8A, 8B) of said reaction unit (1), said first heat exchanger (41) being configured so as to transfer part of the thermal energy of the products of said second stage to said reaction mixture before it reaches said reaction elements (8A, 8B).

11. The device (2) according to claim 10, wherein said device (2) comprises an evaporator (71) to generate water vapor destined to form said reaction mixture, said evaporator (71) being configured to evaporate a flow of water through the thermal energy supplied by said reaction mixture delivered from said reaction elements (8A,8B).

## Patentansprüche

1. Endotherme Reaktionseinheit (1), aufweisend zumindest ein Reaktionselement (8A, 8B), das einen Gehäusekörper (9) aufweist, der dazu vorgesehen ist, dass eine Reaktionsmischung hindurchfließt, **dadurch gekennzeichnet, dass** sie aufweist:
- eine erste Brennkammer (10) aus metallischem Material, in der eine erste Verbrennungsstufe erzeugt wird;
- eine zweite Brennkammer (20), die eine zweite Verbrennungsstufe definiert, wobei die erste Brennkammer (10) zumindest teilweise in der zweiten Brennkammer (20) aufgenommen ist,
wobei das zumindest eine Reaktionselement zumindest teilweise in der zweiten Brennkammer (20) aufgenommen ist und thermisch mit der ersten Brennkammer (10) verbunden ist, wobei die erste Brennkammer (10) derart ausgestaltet ist, dass in dieser Wärme erzeugt wird und zumindest ein Teil der Wärme durch Wärmeleitung zu dem zumindest einen Reaktionselement (8) geleitet wird.

2. Reaktionseinheit (1) gemäß Anspruch 1, wobei das zumindest eine Reaktionselement (8A, 8B) einen Reaktionskatalysator aufweist.

3. Reaktionseinheit (1) gemäß Anspruch 1 oder 2, wobei der Gehäusekörper (8B) des zumindest einen Reaktionselements (8A, 8B) an die Außenseite der Wände der ersten Brennkammer (10) geschweißt ist.

4. Reaktionseinheit (1) gemäß einem der Ansprüche 1 bis 3, wobei die Einheit (1) eine Vielzahl von Reaktionselementen (8) aufweist, die thermisch mit der ersten Brennkammer (10) verbunden sind, wobei zumindest ein Paar der Reaktionselemente (8A, 8B) gegenseitig in hydraulischer Verbindung stehen, um den Durchfluss der Reaktionsmischung von einem Reaktionselement (8A) zum anderen (8B) zu ermöglichen.

5. Reaktionseinheit (1) gemäß Anspruch 1, wobei die Reaktionseinheit einen Brenner (100) aufweist, der aus einem zylindrischen Rohrelement (15) geformt ist, das sich entlang einer Längsachse (X) erstreckt, wobei das Rohrelement eine axial wirkende Kavität aufweist, die an zumindest einer Seite offen ist und mit einem ersten Abschnitt versehen ist, der die erste Brennkammer (10) definiert, wobei die Reaktionselemente (8A, 8B) einen im Wesentlichen zylindrischen und innen hohlen Gehäusekörper (9) aufweisen, der sich entlang einer jeweiligen Längsrichtung (Y) erstreckt, wobei die Reaktionselemente (8A, 8B) mit der Außenseite der Wände des Rohrelements (15) verbunden sind, die den ersten Abschnitt der axialen Kavität begrenzen, so dass für jedes Reaktionselement (8A, 8B) die jeweilige Längsachse im Wesentlichen parallel zur Längsachse des Rohrelements (15) ist.

6. Reaktionseinheit (1) gemäß Anspruch 5, wobei der Brenner (100) aufweist:
- erste Zuführmittel, um ein erstes Verbrennungsreagens in die axial wirkende Kavität in einer Einlassposition (PAC) des ersten Reagens einzuleiten;
- zweite Zuführmittel, um ein zweites Verbrennungsreagens in die axial wirkende Kavität in einer Einlassposition (PC) des zweiten Reagens einzuleiten,
und wobei die axial wirkende Kavität einen zweiten Abschnitt zwischen der Einlassposition (PAC) des ersten Reagens und der Einlassposition (PC) des zweiten Reagens aufweist, wobei der zweite Abschnitt eine Stabilisierungskammer (11A) die Strömung des ersten Reagens stromaufwärts der ersten Brennkammer (10) begrenzt,
wobei die ersten Zuführmittel derart ausgestaltet sind, dass ein Zufluss des ersten Reagens in einer Richtung tangential zum Querschnitt der Stabilisierungskammer (11A) eingeleitet wird, und wobei die zweiten Zuführmittel derart ausgestaltet sind, dass ein Zufluss des zweiten Reagens in einer Richtung im Wesentlichen parallel zur Längsachse eingeleitet wird, entlang derer sich das Rohrelement (15) erstreckt.

7. Reaktionseinheit (1) gemäß Anspruch 6, wobei der erste Abschnitt und der zweite Abschnitt der axial wirkenden Kavität des Rohrelements (15) den gleichen Durchmesser aufweisen.

8. Reaktionseinheit (1) gemäß einem der Ansprüche 5 bis 7, wobei die zweite Brennkammer (20) einen im Wesentlichen zylindrischen Gehäuseeinsatz (50) aufweist, der sich zwischen einer ersten (51) und einer zweiten Querwand (52) entlang einer jeweiligen Längsachse erstreckt, wobei das Rohrelement (15) des Brenners (100) wirksam derart positioniert ist, dass seine Längsachse (X) im Wesentlichen mit der Längsachse übereinstimmt, entlang derer sich der Gehäuseeinsatz (50) erstreckt.

9. Reaktionseinheit (1) gemäß einem der Ansprüche 1 bis 8, wobei die Einheit (1) Zuführmittel aufweist, um ein Verbrennungsreagens (AC2) in die zweite Brennkammer (20) einzuleiten.

10. Methandampf- Reformiervorrichtung (2), derart gestaltet, um eine Reaktionsmischung aufzubereiten, die zum Teil aus Wasserdampf und zum Teil aus Kohlenwasserstoffgasen besteht, **dadurch gekennzeichnet, dass** sie eine Reaktionseinheit (1) gemäß einem der Ansprüche 1 bis 9 aufweist, wobei die Reaktionsmischung so suszeptibel ist, dass sie durch ein oder mehrere Reaktionselemente (8A, 8B) der Reaktionseinheit (1) fließen kann, wobei die Vorrichtung (2) einen ersten Wärmetauscher (41) aufweist, derart gestaltet, dass er die Reaktionsmischung erwärmen kann bevor sie durch das eine oder die mehreren Reaktionselemente (8A, 8B) der Reaktionseinheit (1) fließt, wobei der erste Wärmetauscher (41) derart gestaltet ist, dass er einen Abschnitt der thermischen Energie der Produkte der zweiten Stufe auf die Reaktionsmischung übertragen kann, bevor diese die Reaktionselemente (8A, 8B) erreicht.

11. Vorrichtung (2) gemäß Anspruch 10, wobei die Vorrichtung (2) einen Verdampfer (71) aufweist, um Wasserdampf für die Herstellung der Reaktionsmischung zu erzeugen, wobei der Verdampfer (71) derart ausgestaltet ist, dass er einen Wasserstrom durch die thermische Energie verdampft, die durch die Reaktionsmischung bereitgestellt wird, die von den Reaktionselementen (8A, 8B), zur Verfügung gestellt wird.

## Revendications

1. Unité de réaction endothermique (1) comprenant au moins un élément de réaction (8A, 8B) incluant un corps de logement (9) à travers lequel un mélange de réaction est destiné à passer **caractérisée en ce qu'**elle comprend :
- une première chambre de combustion (10) composée d'un matériau métallique, à l'intérieur de laquelle est produit un premier étage de combustion ;
- une seconde chambre de combustion (20) définissant un second étage de combustion, ladite première chambre de combustion (10) étant logée au moins partiellement à l'intérieur de ladite seconde chambre de combustion (20),
dans laquelle
ledit au moins un élément de réaction est logé au moins partiellement à l'intérieur de ladite seconde chambre de combustion (20) et est thermiquement connecté à ladite première chambre de combustion (10), ladite première chambre de combustion (10) étant configurée pour générer de la chaleur à l'intérieur de celle-ci et pour transférer par conduction au moins une partie de ladite chaleur vers ledit au moins un élément de réaction (8).

2. Unité de réaction (1) selon la revendication 1, dans laquelle ledit au moins un élément de réaction (8A, 8B) contient un catalyseur de réaction.

3. Unité de réaction (1) selon la revendication 1 ou 2, dans laquelle ledit corps de logement (8B) dudit au moins un élément de réaction (8A, 8B) est soudé à l'extérieur des parois de ladite première chambre de combustion (10).

4. Unité de réaction (1) selon l'une quelconque des revendications 1 à 3, dans laquelle ladite unité (1) comprend une pluralité d'éléments de réaction (8) thermiquement connectés à ladite première chambre de combustion (10), au moins une paire desdits éléments de réaction (8A, 8B) étant mutuellement en communication hydraulique pour permettre le passage dudit mélange de réaction d'un élément de réaction (8A) à l'autre (8B).

5. Unité de réaction (1) selon la revendication 1, dans laquelle ladite unité de réaction comprend un brûleur (100) formé par un élément tubulaire de forme cylindrique (15) qui s'étend le long d'un axe longitudinal (X), ledit élément tubulaire comprenant une cavité de fonctionnement axiale ouverte au moins sur un côté et pourvue d'une première portion d'elle qui définit ladite première chambre de combustion (10), lesdits éléments de réaction (8A, 8B) comprenant un corps de logement intérieurement creux et sensiblement cylindrique (9) qui s'étend le long d'une direction longitudinale relative (Y), lesdits éléments de réaction (8A, 8B) étant connectés à la surface extérieure des parois dudit élément tubulaire (15) qui délimitent ladite première portion de ladite cavité axiale de telle sorte que pour chaque élément de réaction (8A, 8B) l'axe longitudinal relatif est sensiblement parallèle à l'axe longitudinal dudit élément tubulaire (15).

6. Unité de réaction (1) selon la revendication 5, dans laquelle ledit brûleur (100) comprend :
- un premier moyen d'acheminement pour introduire un premier agent de combustion dans ladite cavité de fonctionnement axiale dans une position d'admission (PAC) dudit premier réactif ;
- un second moyen d'acheminement pour introduire un second agent de combustion dans ladite cavité de fonctionnement axiale dans une position d'admission (PC) dudit second réactif ;
et dans laquelle ladite cavité de fonctionnement axiale comprend une seconde portion entre la position d'admission (PAC) dudit premier réactif et la position d'admission (PC) dudit second réactif, ladite seconde portion délimitant une chambre de stabilisation (11A) de l'écoulement dudit premier réactif en amont de ladite première chambre de combustion (10), ledit premier moyen d'acheminement étant configuré de manière à introduire un écoulement de premier réactif en fonction d'une direction tangentielle à la section transversale de ladite chambre de stabilisation (11A), ledit second moyen d'acheminement étant configuré de manière à introduire un écoulement de second réactif en fonction d'une direction sensiblement parallèle à l'axe longitudinal le long duquel l'élément tubulaire (15) s'étend.

7. Unité de réaction (1) selon la revendication 6, dans laquelle ladite première portion et ladite seconde portion de ladite cavité de fonctionnement axiale dudit élément tubulaire (15) ont le même diamètre.

8. Unité de réaction (1) selon l'une quelconque des revendications 5 à 7, dans laquelle ladite seconde chambre de combustion (20) comprend un revêtement de logement sensiblement de forme cylindrique (50) qui s'étend entre une première (51) et une seconde (52) paroi transversale le long d'un axe longitudinal relatif, ledit élément tubulaire (15) dudit brûleur (100) étant fonctionnellement positionné de telle sorte que son axe longitudinal (X) coïncide sensiblement avec l'axe longitudinal par rapport auquel s'étend ledit revêtement de logement (50).

9. Unité de réaction (1) selon une ou plusieurs des revendications 1 à 8, dans laquelle ladite unité (1) comprend un moyen d'acheminement pour introduire un réactif de combustion (AC2) dans ladite seconde chambre de combustion (20).

10. Dispositif de reformage à la vapeur de méthane (2) configuré pour traiter un mélange de réaction formé en partie par de la vapeur d'eau et en partie par des gaz d'hydrocarbures, **caractérisé en ce qu'**il comprend une unité de réaction (1) selon l'une quelconque des revendications 1 à 9, ledit mélange de réaction étant susceptible de passer à travers un ou plusieurs éléments de réaction (8A, 8B) de ladite unité de réaction (1), dans lequel ledit dispositif (2) comprend un premier échangeur de chaleur (41) configuré pour chauffer ledit mélange de réaction avant qu'il ne passe à travers lesdits un ou plusieurs éléments de réaction (8A, 8B) de ladite unité de réaction (1), ledit premier échangeur de chaleur (41) étant configuré de manière à transférer une partie de l'énergie thermique des produits dudit second étage audit mélange de réaction avant qu'il n'atteigne lesdits éléments de réaction (8A, 8B).

11. Dispositif (2) selon la revendication 10, dans lequel ledit dispositif (2) comprend un évaporateur (71) pour générer de la vapeur d'eau destinée à former ledit mélange de réaction, ledit évaporateur (71) étant configuré pour faire s'évaporer un écoulement d'eau à travers l'énergie thermique apportée par ledit mélange de réaction distribué depuis lesdits éléments de réaction (8A, 8B).
